# EUROPÄISCHE PATENTSCHRIFT

(11) **EP 4 054 880 B1**
(45) Veröffentlichungstag und Bekanntmachung des Hinweises auf die Patenterteilung: **11.10.2023**
(21) Anmeldenummer: 20793653.5
(22) Anmeldetag: 19.10.2020
(51) Int. Cl.: B60L 53/14, B60L 53/36, B60L 53/30, H01R 13/629, B60L 53/16, H02J 7/00, G01R 29/00

(54) **SYSTEM ZUM ERZEUGEN EINER LADESPANNUNG FÜR EIN LADEN EINER BATTERIE EINES FAHRZEUGS**
SYSTEM FOR GENERATING A CHARGE VOLTAGE FOR CHARGING A VEHICLE BATTERY
SYSTÈME DE GÉNÉRATION D'UNE TENSION DE CHARGE À CHARGER LA BATTERIE D'UN VÉHICULE

(30) Priorität: 04.11.2019 DE 102019216919
(43) Veröffentlichungstag der Anmeldung: 14.09.2022
(73) Patentinhaber: ContiTech Antriebssysteme GmbH, 30165 Hannover (DE)
(72) Erfinder: FREIHEIT, Philipp, 30165 Hannover (DE); TEVES, Reinhard, 30165 Hannover (DE)
(74) Vertreter: Continental Corporation
(86) Internationale Anmeldenummer: PCT/EP2020/079352
(87) Internationale Veröffentlichungsnummer: WO 2021/089309

(56) Entgegenhaltungen:
- EP-A1- 3 015 308
- EP-A2- 1 921 523
- DE-A1-102016 112 022
- DE-A1-102016 121 229
- US-B1- 6 307 347

## Beschreibung

Die Erfindung betrifft ein System zum Erzeugen einer Ladespannung für ein Laden einer Batterie eines zumindest zwei Stromabnehmer umfassenden Fahrzeugs. Bei dem Fahrzeug handelt es sich vorzugsweise um ein Kraftfahrzeug, und besonders bevorzugt um ein sogenanntes Elektrokraftfahrzeug. Das Fahrzeug kann dazu ausgebildet sein, ausschließlich elektrisch angetrieben zu sein. Es ist jedoch auch möglich, dass das Fahrzeug einen zusätzlichen elektrischen Antrieb ergänzend zu einem Verbrennungsmotor als Antriebseinheit aufweist. Im Folgenden wird vereinfacht auf den Begriff Fahrzeug Bezug genommen, wenn damit ein Kraftfahrzeug gemeint ist, das eine Batterie aufweist, die als Energiespeicher für einen elektrischen Antrieb des Kraftfahrzeugs dient. Aus dem Stand der Technik sind derartige Fahrzeuge bekannt. Diese Fahrzeuge weisen zumeist eine von außen zugängliche Steckdose auf, die dazu dient, um ein elektrisches Verbindungskabel mit dieser Steckdose zu verbinden, wobei das elektrische Verbindungskabel zu einer Ladestation führt. Von der Ladestation wird eine Ladespannung über das elektrische Verbindungskabel bereitgestellt, die über die Steckdose am Fahrzeug direkt oder indirekt zu der Batterie führt, um diese aufzuladen.

In der Praxis kann es jedoch vorkommen, dass der Benutzer des Fahrzeugs beim Abstellen des Fahrzeugs nicht daran denkt, das elektrische Verbindungskabel an die Steckdose des Fahrzeugs anzuschließen. Sofern die Batterien beim Abstellen des Fahrzeugs einen sehr niedrigen Ladezustand aufweisen, kann der Benutzer bei dem nächsten Verwenden des Fahrzeugs allenfalls eine sehr kurze Reichweite mit dem Fahrzeug zurücklegen. Es besteht deshalb der Wunsch, dass das Fahrzeug beim Abstellen automatisch aufgeladen wird.

Eine weitere Anforderung bezüglich des Ladens eines Fahrzeugs kann bei autonom gelenkten Fahrzeugen entstehen. Diese Fahrzeuge werden als autonome Fahrzeuge bezeichnet und können autonom zu einem Parkplatz fahren, um hier zu parken. Zum Aufladen des autonomen Fahrzeugs bedarf es derzeit jedoch weiterhin einer menschlichen Unterstützung, nämlich einer Person, die ein elektrisches Verbindungskabel von einer Ladestation zu einer Steckdose des autonomen Fahrzeugs führt, um dieses in die genannte Steckdose des autonomen Fahrzeugs einzuführen. Erst dann findet das Aufladen der Batterien des autonomen Fahrzeugs statt. Auch nach dem Aufladen ist das elektrische Verbindungskabel durch eine Person von dem autonomen Fahrzeug zu trennen.

Zum kabellosen Aufladen eines Elektrofahrzeugs offenbart die DE 10 2016 112 022 A1 eine stationär anordbare Kontaktplatte mit mindestens einem elektrischen Kontakt für einen an einem Stromabnehmer eines Fahrzeugs angeordneten Stromabnehmerkontakt. Nachteiliger Weise kann die Kontaktplatte nicht automatisch zwischen einem Ruhezustand und einem Ladezustand wechseln, weshalb der Ladevorgang weiterhin manuell gestartet werden muss.

Die EP 1 921 523 A2 betrifft eine Ladevorrichtung für autonome Roboter, wobei eine Steuereinheit die Impedanz an Anschlussleitungen detektiert und daraufhin in einen Ladezustand wechselt, um eine Ladespannung an den Anschlussleitungen herzustellen. Die Ladevorrichtung weist zwei Kontakte auf. Der Roboter muss daher äußerst präzise über den beiden Kontakten positioniert werden, damit der Ladevorgang gestartet werden kann.

Die US 6 307 347 B1 betrifft eine Vorrichtung zum Zuführen elektrischer Ladung zu einem Fahrzeug mit Kontaktelementen. Wenn das Fahrzeug über der Ladevorrichtung positioniert ist, können die Kontaktelemente des Fahrzeugs abgesenkt werden. In den Kontaktelementen angeordnete Elektromagnete erzeugen ein magnetisches Feld, welches ein Relais von einer ersten Schaltstellung in eine zweite Schaltstellung bewegt. In der zweiten Schaltstellung des Relais wird ein elektrischer Strom von dem Relais über das Kontaktelement an das Fahrzeug übertragen. Es zeigt sich hierbei als nachteilig, dass für die Aktivierung des Ladevorgangs zusätzliche Komponenten in Form von kostspieligen Elektromagneten benötigt werden, wodurch zudem auch die Komponentenvielfalt zunimmt.

Der Erfindung liegt deshalb die Aufgabe zugrunde, ein System bereitzustellen, das ein automatisches Aufladen der Batterien eines parkenden Fahrzeugs erlaubt. Insbesondere soll eine Ladespannung derart zur Verfügung gestellt werden können, sodass das Aufladen des Fahrzeugs ohne menschliches Hinzutun automatisiert in Gang gesetzt werden kann.

Gelöst wird die Aufgabe durch ein System mit den Merkmalen des Anspruchs 1. Vorgesehen ist also ein System zur Erzeugung einer Ladespannung für ein Laden einer Batterie eines zumindest zwei Stromabnehmer umfassenden Fahrzeugs. Mit dem Laden ist vorzugsweise ein Aufladen der Batterie gemeint. Das System weist eine Mehrzahl von elektrisch leitfähigen Kontaktplatten und eine Steuereinheit auf. Die Kontaktplatten sind in einem vorbestimmten Kontaktbereich einer gemeinsamen Ebene verteilt angeordnet. Die Kontaktplatten sind ausgebildet, einen Bereich einer Parkfläche eines Parkplatzes für ein Fahrzeug zu bilden. Jede Kontaktplatte ist kontaktfrei zu benachbarten Kontaktplatten angeordnet. Außerdem ist jede Kontaktplatte mit einer zugehörigen, elektrisch leitfähigen Verbindungsleitung verbunden, die mit der Steuereinheit gekoppelt ist, sodass von der Steuereinheit zu jeder Kontaktplatte eine elektrische Leitungsverbindung über die jeweils zugehörige Verbindungsleitung hergestellt ist. Die Steuereinheit ist ausgebildet, zwischen einem Ladezustand und einem Ruhezustand zu wechseln. Außerdem ist die Steuereinheit ausgebildet, im Ruhezustand einen direkten oder indirekten elektrischen Verbindungskontakt zwischen einer ersten Kontaktplatte der Mehrzahl der Kontaktplatten und einer anderen, zweiten Kontaktplatte der Mehrzahl der Kontaktplatten zu erkennen. Die Steuereinheit ist ausgebildet, bei Erkennen des elektrischen Verbindungskontakts in den Ladezustand zu wechseln. Außerdem ist die Steuereinheit ausgebildet, im Ladezustand über die Verbindungsleitung zur ersten Kontaktplatte und die Verbindungsleitung zur zweiten Kontaktplatte jeweils ein elektrisches Spannungspotential an der ersten und zweiten Kontaktplatte anzulegen, sodass als Ladespannung eine elektrische Spannungsdifferenz zwischen der ersten und zweiten Kontaktplatte entsteht. Weiterhin ist die Steuereinheit ausgebildet, in dem Ruhezustand eine elektrische Spannung zwischen jeder Kombination von zwei Kontaktplatten der Mehrzahl der Kontaktplatten zu erfassen. Über die Erfassung der elektrischen Spannung zwischen jeder Kombination von zwei der Mehrzahl der Kontaktplatten kann indirekt auf den jeweils zugehörigen elektrischen Verbindungskontakt geschlossen werden.

Zudem ist die Steuereinheit ausgebildet, in dem Ruhezustand einen zumindest indirekten elektrischen Verbindungskontakt zwischen der ersten und zweiten Kontaktplatte zu erkennen, wenn eine von den Stromabnehmern des Fahrzeugs angelegte elektrische Fremdspannung zwischen der ersten und zweiten Kontaktplatte aufgebaut wird und im Ruhezustand einen direkten elektrischen Verbindungskontakt zwischen der ersten und zweiten Kontaktplatte zu erkennen, wenn der elektrische Widerstand zwischen der ersten und zweiten Kontaktplatte im Ruhezustand größer als ein Mindestwiderstand ist. Die Fremdspannung kann von den Stromabnehmern des Fahrzeugs an die erste und zweite Kontaktplatte angelegt werden. Wird die elektrische Fremdspannung zwischen der ersten und zweiten Kontaktplatte von der Steuereinheit erfasst, kann die Steuereinheit basierend auf dieser Erfassung der Fremdspannung den zumindest indirekten elektrischen Verbindungskontakt zwischen der ersten und zweiten Kontaktplatte als ein direktes Resultat aus der Fremdspannung erkennen. Wird ein Fahrzeug beispielsweise auf einem Parkplatz abgestellt, wobei dessen Parkfläche zumindest in einem Bereich von den Kontaktflächen der Kontaktplatten gebildet ist, und wobei die Stromabnehmer nach unten bewegt werden, um einen elektrischen Kontakt zu der ersten und zweiten Kontaktplatte herzustellen sowie im Anschluss eine Fremdspannung über die Stromabnehmer an der ersten und zweiten Kontaktplatte anzulegen, so ist die Steuereinheit dazu ausgebildet, die Fremdspannung zu erfassen und basierend auf der erfassten Fremdspannung den indirekten elektrischen Verbindungskontakt zwischen der ersten und zweiten Kontaktplatte zu erkennen. Daraufhin kann die Steuereinheit, insbesondere nach Ablauf der Verweildauer, in den Ladezustand wechseln, um die Ladespannung zwischen der ersten und zweiten Kontaktplatte hervorzurufen. Dies wiederum erzeugt einen Ladestrom, der zum Aufladen der Batterie des Fahrzeugs dient.

Das System dient beispielsweise zum Aufladen einer Batterie eines Fahrzeugs, das bewegliche Stromabnehmer am Unterboden des Fahrzeugs aufweist. Werden die Stromabnehmer des Fahrzeugs über den Kontaktplatten des Systems nach unten bewegt, wird von jedem Stromabnehmer ein elektrischer Kontakt zu einer der Kontaktplatten hergestellt. Ein erster Stromabnehmer stellt somit einen elektrischen Kontakt zu der ersten Kontaktplatte des Systems her. Ein zweiter Stromabnehmer des Fahrzeugs stellt einen zweiten elektrischen Kontakt zu der zweiten Kontaktplatte des Systems her. Ob einer der beiden Stromabnehmer gegebenenfalls noch weitere Kontaktplatten, also beispielsweise noch mehrere Kontaktplatten, gleichzeitig berührt, ist dabei nicht nachteilig oder schädlich. Denn es wird jedenfalls mindestens die erste Kontaktplatte mit einem ersten Stromabnehmer und eine zweite Kontaktplatte mit einem zweiten Stromabnehmer in Kontakt kommen, wobei weder die Stromabnehmer untereinander noch die erste und zweite Kontaktplatte untereinander einen direkten Berührungskontakt zueinander aufweisen.

Nachdem die Stromabnehmer mit der ersten und zweiten Kontaktplatte in Kontakt gebracht sind, können die beiden Stromabnehmer beispielsweise einen indirekten elektrischen Verbindungskontakt herstellen, der über eine elektrische Schaltung des Fahrzeugs gegeben ist, die direkt oder indirekt mit der Batterie des Fahrzeugs gekoppelt ist. Die elektrische Schaltung des Fahrzeugs kann dazu ausgebildet sein, den elektrischen Verbindungskontakt zwischen dem ersten und zweiten Stromabnehmer herzustellen, um zu signalisieren, dass das Fahrzeug bereit ist, um an eine Ladespannung angeschlossen zu werden. Alternativ oder ergänzend kann die elektrische Schaltung des Fahrzeugs dazu ausgebildet sein, um eine elektrische Spannung, die als Fremdspannung bezeichnet wird, an die Stromabnehmer anzulegen, sodass beim Kontakt der Stromabnehmer mit dem ersten und zweiten Kontaktelement die elektrische Fremdspannung an das erste und zweite Kontaktelement angelegt wird. Andere Signalisierungsmöglichkeiten für die elektrische Schaltung des Fahrzeugs sind ebenfalls möglich, um bei einem elektrischen Kontakt der Stromabnehmer mit dem ersten und zweiten Kontaktelement des Systems zu signalisieren, dass das Fahrzeug bereit ist, um eine Ladespannung an die Stromabnehmer angelegt zu bekommen.

Die Steuereinheit des Systems ist deshalb dazu ausgebildet, im Ruhezustand einen direkten oder indirekten elektrischen Verbindungskontakt zwischen zwei Kontaktplatten der Mehrzahl der Kontaktplatten zu erkennen. Ein direkter elektrischer Verbindungskontakt zwischen der ersten und zweiten Kontaktplatte kann erkannt werden, wenn der elektrische Widerstand zwischen der ersten und zweiten Kontaktplatte im Ruhezustand kleiner als ein vorbestimmter Referenzwiderstand und größer als ein Mindestwiderstand ist. Die Kontaktplatten, zwischen denen der elektrische Verbindungskontakt von der Steuereinheit erkannt wird, bilden die erste Kontaktplatte und die zweite Kontaktplatte. Der elektrische Verbindungskontakt zwischen der ersten und zweiten Kontaktplatte kann von dem Fahrzeug über die Stromabnehmer, die in Kontakt mit der ersten und zweiten Kontaktplatte sind, derart hergestellt werden, dass ein elektrischer Widerstand mittels der elektrischen Schaltung des Fahrzeugs zwischen den Stromabnehmern auf einen Wert reduziert wird, der zur Erkennung des elektrischen Verbindungskontakts geeignet ist. Alternativ oder ergänzend kann eine Spannung und/oder ein elektrisches Referenzsignal von dem Fahrzeug an die Stromabnehmer angelegt werden, was nur dann möglich ist, wenn es zumindest einen Innenwiderstand zwischen dem ersten und dem zweiten Stromabnehmer gibt. Denn auch eine Spannungsquelle hat einen vorbestimmten Innenwiderstand. Anzumerken ist, dass der elektrische Verbindungskontakt nicht durch einen Berührungskontakt zwischen den Kontaktplatten entsteht. Diese sind nämlich kontaktfrei, also ohne mechanischen direkten Kontakt, zueinander angeordnet. Außerdem ist die Steuereinheit ausgebildet, bei Erkennen des elektrischen Verbindungskontakts zwischen der ersten und zweiten Kontaktplatte von dem Ruhezustand in den Ladezustand zu wechseln. Wenn im Folgenden auf einen Verbindungskontakt Bezug genommen wird, soll sich dieser Verbindungskontakt auf einen vorzugsweise allein elektrischen Verbindungskontakt beziehen. Grundsätzlich kann der Wechsel der Steuereinheit in den Ladezustand unmittelbar nach dem Erkennen des elektrischen Verbindungskontakts stattfinden. Alternativ hat es sich jedoch als vorteilhaft herausgestellt, wenn die Steuereinheit ausgebildet ist, bei Erkennen des elektrischen Verbindungskontakts von dem Ruhezustand in den Ladezustand zu wechseln, wenn der elektrische Verbindungskontakt nach dem erstmaligen Erkennen für eine vorbestimmte Verweildauer ununterbrochen erhalten bleibt. Die Verweildauer kann beispielsweise zwischen 0,1 Sekunden und 10 Sekunden sein. So kann die Verweildauer beispielsweise 2 Sekunden sind. Wird von der Steuereinheit der elektrische Verbindungskontakt zwischen der ersten und der zweiten Kontaktplatte erkannt, so wird im Anschluss von der Steuereinheit überprüft, ob dieser elektrische Verbindungskontakt über die zuvor genannte Verweildauer ununterbrochen erhalten bleibt. Ist dies der Fall, wechselt die Steuereinheit von dem Ruhezustand in den Ladezustand. Zuvor findet kein Wechsel von dem Ruhezustand in den Ladezustand statt. Vielmehr ist es bevorzugt vorgesehen, dass die Steuereinheit unmittelbar an dem Zeitpunkt der Erkennung des elektrischen Verbindungskontakts und der anschließenden Verweildauer im Ruhezustand verbleibt. Die Verweildauer bietet den Vorteil, dass ein schneller Wechsel zwischen dem Ruhezustand und dem Ladezustand verhindert wird.

Nachdem die Steuereinheit in den Ladezustand gewechselt ist, wird die Steuereinheit eine Ladespannung zwischen der ersten Kontaktplatte und der zweiten Kontaktplatte erzeugen. Hierzu wird von der Steuereinheit über die erste Verbindungsleitung ein erstes elektrisches Potential an der ersten Kontaktplatte und über die zweite Verbindungsleitung ein zweites elektrisches Potential an der zweiten Kontaktplatte erzeugt, wobei das erste und zweite elektrische Potential eine Spannungsdifferenz zueinander aufweisen, die der Ladespannung entspricht. In dem zuvor erläuterten Beispiel sind die beiden Stromabnehmer des Fahrzeugs in elektrischem Kontakt mit der ersten bzw. zweiten elektrischen Kontaktplatte. Die Ladespannung wird somit auch zwischen den beiden Stromabnehmern des Fahrzeugs angelegt, was zu einem Aufladen der Batterie im Fahrzeug und einem entsprechenden Ladestrom durch die Kontaktplatten bzw. die Stromabnehmer des Fahrzeugs führt.

Sofern das Fahrzeug ein autonomes Fahrzeug ist, das dazu ausgebildet ist, zu einem Parkplatz zu fahren, dessen Parkfläche zumindest teilweise von den Kontaktplatten des Systems gebildet ist, so kann das autonome Fahrzeug ebenfalls dazu ausgebildet sein, die Stromabnehmer nach unten in Richtung der Kontaktplatten zu bewegen, um einen elektrischen Kontakt zwischen dem Stromabnehmer und jeweils mindestens einer der Kontaktplatten herzustellen. Dabei entstehen der Kontakt zwischen dem ersten Stromabnehmer und der ersten Kontaktplatte sowie der elektrische Kontakt zwischen dem zweiten Stromabnehmer und der zweiten Kontaktplatte. Daraufhin kann das System, wie zuvor erläutert, die Ladespannung an die erste und zweite Kontaktplatte und somit auch an die beiden Stromabnehmer anlegen, was ein Aufladen der Batterie des autonomen Fahrzeugs gewährleistet. Die Ladespannung kann eine Gleichspannung oder eine Wechselspannung sein.

Eine vorteilhafte Ausgestaltung des Systems zeichnet sich dadurch aus, dass die Mehrzahl der Kontaktplatten nach einem vorbestimmten Muster angeordnet ist. Das Muster kann beispielsweise nach Art eines Rasters sein. Dies ist insbesondere dann von Vorteil, wenn die Kontaktplatten gleich ausgestaltet sind und jeweils eine rechteckige Kontaktfläche bilden. Als vorteilhaft hat es sich herausgestellt, wenn die Mehrzahl der Kontaktplatten nach Art eines Schachbrettmusters angeordnet ist. Die Anordnung der Kontaktplatten nach dem vorbestimmten Muster kann also darin resultieren, dass mehrere Reihen mit Kontaktplatten parallel zueinander angeordnet sind. In jeder Reihe sind außerdem mehrere Kontaktplatten fluchtend hintereinander angeordnet. Dadurch können eine Vielzahl von Reihen und Spalten von Kontaktplatten gebildet sein.

Eine vorteilhafte Ausgestaltung des Systems zeichnet sich dadurch aus, dass jede Kontaktplatte aus einem elektrisch leitfähigen Metall gebildet ist. Jede Kontaktplatte kann eine metallische und damit elektrisch leitfähige Kontaktfläche bilden. Jede Kontaktfläche kann einen zugehörigen Teilbereich der Parkfläche für einen Parkplatz bilden. Die Parkfläche kann somit in zumindest einem Teilbereich durch eine Vielzahl von Kontaktflächen gebildet sein, die durch die elektrisch leitfähigen und metallischen Kontaktplatten gebildet sind. Wenn nun ein Fahrzeug auf dem entsprechenden Parkplatz abgestellt wird, kann dieses Fahrzeug die zugehörigen Stromabnehmer in Richtung der Parkfläche und somit auch in Richtung der Kontaktplatten des Systems bewegen, bis jede der beiden Stromabnehmer einen elektrischen Kontakt zu jeweils mindestens einer der Kontaktplatten erreicht.

Eine weitere vorteilhafte Ausgestaltung des Systems zeichnet sich dadurch aus, dass die Kontaktplatten an ihren Kanten durch elektrisches Isolierungsmaterial elektrisch voneinander isoliert angeordnet sind. An den Kanten sind die Kontaktplatten gegenüberliegend zueinander angeordnet. Um zu verhindern, dass beispielsweise zwei gegenüberliegend zueinander angeordnete Kontaktplatten einen direkten elektrischen Berührungskontakt an ihren Kanten herstellen, ist es vorgesehen, dass zwischen den Kanten elektrisches Isolierungsmaterial angeordnet ist, um eine elektrische Isolierung der beiden Kontaktplatten zu erreichen. Die elektrische Isolierung bezieht sich hierbei auf den unmittelbaren und direkten Bereich zwischen den Kanten der Kontaktplatten. Das Isolierungsmaterial kann beispielsweise von einem elektrisch nicht leitfähigen Elastomermaterial gebildet sein. Sofern die Steuereinheit im Ruhezustand ist, wird über die elektrischen Verbindungsleitungen kein elektrisches Potenzial an die Kontaktplatten angelegt. Vielmehr ist es bevorzugt vorgesehen, dass die Steuereinheit des Systems derart ausgebildet ist, um die Kontaktplatten im Ruhezustand zumindest im Wesentlichen spannungsfrei zu halten oder von einer elektrischen Potentialquelle zu entkoppeln. Wechselt die Steuereinheit hingegen in den Ladezustand, so können zwei der Mehrzahl der Kontaktplatten die erste und zweite Kontaktplatte bilden, die von der Steuereinheit über die zugehörigen Verbindungsleitungen derart elektrisch angesteuert werden, sodass eine Ladespannung zwischen der ersten Kontaktplatte und der zweiten Kontaktplatte entsteht. Indem das Isolierungsmaterial zwischen den Kanten der Kontaktplatten angeordnet ist, wird ein elektrischer Kurzschluss zwischen der ersten Kontaktplatte und der zweiten Kontaktplatte effektiv verhindert. Somit lässt sich das System besonders robust zum Erzeugen einer Ladespannung für ein Aufladen einer Batterie eines Fahrzeugs verwenden.

Eine weitere vorteilhafte Ausgestaltung des Systems zeichnet sich dadurch aus, dass das System mindestens neun Kontaktplatten, mindestens 15 Kontaktplatten oder mindestens 20 Kontaktplatten aufweist. Durch die entsprechende Anzahl der Kontaktplatten kann eine gemeinsame Grundfläche von den Kontaktflächen der Kontaktplatten gebildet werden, die es erlaubt, dass ein Fahrzeug auch dann mit einer Ladespannung versorgt werden kann, wenn das Fahrzeug nicht exakt in einer vorbestimmten Parkposition auf dem Parkplatz steht, von dessen Parkfläche zumindest ein Bereich durch die Grundfläche der Kontaktflächen der Kontaktplatten gebildet ist. Denn selbst wenn das Fahrzeug etwas schräg und/oder versetzt zu der vorbestimmten Parkposition auf dem Parkplatz steht, können die Stromabnehmer beim Herabbewegen mit zwei unterschiedlichen Kontaktplatten des Systems in Kontakt kommen, wobei diese Kontaktplatten die erste und zweite Kontaktplatte bilden. Somit ist das System auch robust gegenüber nicht exakt geparkten Fahrzeugen auf einem Parkplatz.

Eine weitere vorteilhafte Ausgestaltung des Systems zeichnet sich dadurch aus, dass alle Kontaktplatten des Systems die gleiche Form und/oder die gleiche Oberflächengröße aufweisen. Die Oberflächengröße bezieht sich dabei jeweils auf die Kontaktfläche der Kontaktplatte. Außerdem hat es sich als vorteilhaft herausgestellt, wenn alle Kontaktplatten gleich ausgebildet sind. Kontaktplatten, die gleich ausgebildet sind, eine gleiche Form aufweisen und/oder eine gleiche Oberflächengröße aufweisen, können besonders einfach in einem vorbestimmten Muster angeordnet werden. Außerdem lässt sich das System mit einer Mehrzahl von gleichen Kontaktplatten besonders kostengünstig herstellen.

Eine weitere vorteilhafte Ausgestaltung des Systems zeichnet sich dadurch aus, dass jede Kontaktplatte von einem Metall, insbesondere einem Edelstahl, gebildet ist. Durch die metallische Ausgestaltung der Kontaktplatte wird auch die Kontaktfläche der Kontaktplatte metallisch sein. Diese kann somit besonderes einfach einen elektrischen Kontakt zu einem Stromabnehmer eines Fahrzeugs herstellen. Das Metall jeder Kontaktplatte ist vorzugsweise von einem rostfreien Metall gebildet. So kann das Metall jeder Kontaktplatte beispielsweise ein Edelstahl sein.

Eine weitere vorteilhafte Ausgestaltung des Systems zeichnet sich dadurch aus, dass die Steuereinheit einen Eingangsanschluss aufweist, über den die Steuereinheit mit einer elektrischen Energiequelle koppelbar ist. Über den Eingangsanschluss kann die Steuereinheit also mit elektrischer Energie der elektrischen Energiequelle versorgt sein. Eine weitere vorteilhafte Ausgestaltung des Systems zeichnet sich dadurch aus, dass die Steuereinheit ausgebildet ist, in dem Ruhezustand einen zumindest indirekten elektrischen Verbindungskontakt zwischen der ersten und zweiten Kontaktplatte zu erkennen, wenn die elektrische Fremdspannung größer als 20 Volt ist. Insbesondere kann es vorgesehen sein, dass die Steuereinheit ausgebildet ist, im Ruhezustand den zumindest indirekten elektrischen Verbindungskontakt zwischen der ersten und zweiten Kontaktplatte zu erkennen, wenn die elektrische Fremdspannung größer als 30 Volt ist. Ist die Fremdspannung kleiner als 20 bzw. 30 Volt, so verbleibt die Steuereinheit im Ruhezustand. Dadurch kann eine robuste Signalgebung über die Fremdspannung von dem Fahrzeug ausgesendet werden, um den Wechsel der Steuereinheit aus dem Ruhezustand in den Ladezustand einzuleiten.

Eine weitere vorteilhafte Ausgestaltung des Systems zeichnet sich dadurch aus, dass die Steuereinheit ausgebildet ist, in dem Ruhezustand einen elektrischen Widerstand zwischen jeder Kombination von zwei Kontaktplatten der Mehrzahl der Kontaktplatten zu erfassen. Über den elektrischen Widerstand kann auf einen möglichen elektrischen Verbindungskontakt zwischen zwei der Kontaktplatten geschlossen werden. Hierzu kann die Steuereinheit entsprechend ausgebildet sein.

Eine weitere vorteilhafte Ausgestaltung des Systems zeichnet sich dadurch aus, dass die Steuereinheit ausgebildet ist, in dem Ruhezustand einen direkten elektrischen Verbindungskontakt zwischen der ersten und zweiten Kontaktplatte zu erkennen, wenn der elektrische Widerstand zwischen der ersten und zweiten Kontaktplatte im Ruhezustand kleiner als ein vorbestimmter Referenzwiderstand, insbesondere mit einem Wert von 50 Ohm, und größer als ein Mindestwiderstand, insbesondere von 2 Ohm, ist. Der elektrische Widerstand zwischen zwei Kontaktplatten, und insbesondere zwischen der ersten und zweiten Kontaktplatte, kann mithilfe der Stromabnehmer des Fahrzeugs auf einen Wert reduziert werden, der kleiner als der vorbestimmte Referenzwiderstand und vorzugsweise größer als der Mindestwiderstand ist. Dies kann von der Steuereinheit erfasst werden und basierend auf dieser Erfassung wird der direkte elektrische Verbindungskontakt zwischen der ersten und zweiten Kontaktplatte erkannt. Wenn also beispielsweise das Fahrzeug die beiden zugehörigen Stromabnehmer mit der ersten bzw. zweiten Kontaktplatte in Kontakt gebracht hat, wobei das Fahrzeug dazu ausgebildet ist, einen elektrischen Widerstand zwischen den beiden Stromabnehmern auf einen Wert einzustellen, der kleiner als der vorbestimmte Referenzwiderstand und vorzugsweise größer als der Mindestwiderstand ist, so kann der von der Steuereinheit erfasste Widerstand zwischen der ersten und zweiten Kontaktplatte dem vom Fahrzeug eingestellten Widerstand zwischen den beiden Stromabnehmern entsprechen. Wenn die Steuereinheit diesen elektrischen Widerstand zwischen der ersten und zweiten Kontaktplatte erfasst, kann sie basierend hierauf den elektrischen Verbindungskontakt zwischen der ersten und zweiten Kontaktplatte erkennen. Ist der elektrische Widerstand zwischen der ersten und zweiten Kontaktplatte hingegen größer als der Referenzwiderstand oder kleiner als der Mindestwiderstand, so wird dies von der Steuereinheit ebenfalls erfasst und nicht als direkter elektrischer Verbindungskontakt zwischen der ersten und zweiten Kontaktplatte erkannt. Ist der elektrische Widerstand zwischen der ersten und zweiten Kontaktplatte größer als der Referenzwiderstand, so wird angenommen, dass dies durch andere äußere Einflüsse verursacht ist, jedoch nicht durch die Stromabnehmer des Fahrzeugs. Ist der elektrische Widerstand zwischen der ersten und zweiten Kontaktplatte hingegen kleiner als der Mindestwiderstand, so kann dies auf einen Kurzschluss zwischen der ersten und zweiten Kontaktplatte und somit auf einen fehlerhaften Zustand des Systems hindeuten, bei dem keine Ladespannung zwischen der ersten und zweiten Kontaktplatte erzeugt werden sollte.

Eine vorteilhafte Ausgestaltung des Systems zeichnet sich dadurch aus, dass die Steuereinheit ausgebildet ist, im Ladezustand als Plattenwiderstand den elektrischen Widerstand zwischen der ersten und zweiten Kontaktplatte zu erfassen, und wobei die Steuereinheit ausgebildet ist, vom Ladezustand in den Ruhezustand zu wechseln oder im Ladezustand das Anlegen der elektrischen Spannungspotentiale an die erste und zweite Kontaktplatte zu unterbrechen, wenn der Plattenwiderstand kleiner als ein Sicherheitswiderstand, insbesondere mit einem Wert von 2 Ohm, ist. Dadurch kann die Sicherheit bei der Verwendung des Systems erhöht werden. Sollte das System beispielsweise mit einer elektrisch leitfähigen Stange manipuliert werden, die einen elektrischen Kurzschluss während des Ladevorgangs zwischen der ersten und zweiten Kontaktplatte hervorruft, so wird dieser elektrische Kurzschluss zu einem Plattenwiderstand führen, dessen Wert kleiner als 2 Ohm ist. Dies wird sodann von der Steuereinheit erkannt, um die Ladespannung abzuschalten oder von dem Ladezustand in den Ruhezustand zu wechseln. Dadurch wird die Sicherheit beim Betrieb des Systems deutlich erhöht.

Eine weitere vorteilhafte Ausgestaltung des Systems zeichnet sich dadurch aus, dass das System als ein stationäres System ausgebildet ist. Das System kann also stationär installiert sein. So kann das System beispielsweise stationär an einem Parkplatz installiert sein, insbesondere derart, dass die Kontaktplatten des Systems einen Teil der Parkflächen bilden.

Eine weitere vorteilhafte Ausgestaltung des Systems zeichnet sich dadurch aus, dass das System als ein mobiles System ausgebildet ist. Die Kontaktplatten des Systems können beispielsweise auf einer ausrollbaren Matte befestigt sein, wobei die ausrollbare Matte aus einem elektrisch isolierendem Material ist. Die Matte ist ein Teil des Systems. Die Verbindungsleitungen können zumindest teilweise in der Matte eingebettet sein und/oder durch diese hindurchführen. Um das mobile System zu verwenden, kann dieses mit den zugehörigen Kontaktplatten auf einem Bereich einer Parkfläche des Parkplatzes ausgelegt werden, sodass die Kontaktplatten daraufhin den entsprechenden Bereich der Parkfläche des Parkplatzes bilden.

Weitere Merkmale, Vorteile und Anwendungsmöglichkeiten der vorliegenden Erfindung ergeben sich aus der nachfolgenden Beschreibung der Ausführungsbeispiele und den Figuren. Dabei bilden alle beschriebenen und/oder bildlich dargestellten Merkmale für sich und in beliebiger Kombination den Gegenstand der Erfindung auch unabhängig von ihrer Zusammensetzung in den einzelnen Ansprüchen oder deren Rückbezügen. In den Figuren stehen weiterhin gleiche Bezugszeichen für gleiche oder ähnliche Objekte.
- Figur 1: zeigt eine vorteilhafte Ausgestaltung des Systems in einer schematischen
- Figur 2: Ansicht. zeigt eine Parkfläche eines Parkplatzes, wobei ein Teilbereich der Parkfläche von den Kontaktplatten einer vorteilhaften Ausgestaltung des Systems gebildet ist.
- Figur 3: zeigt die Parkfläche aus Figur 2 mit kontaktierter erster und zweiter Kontaktplatte.

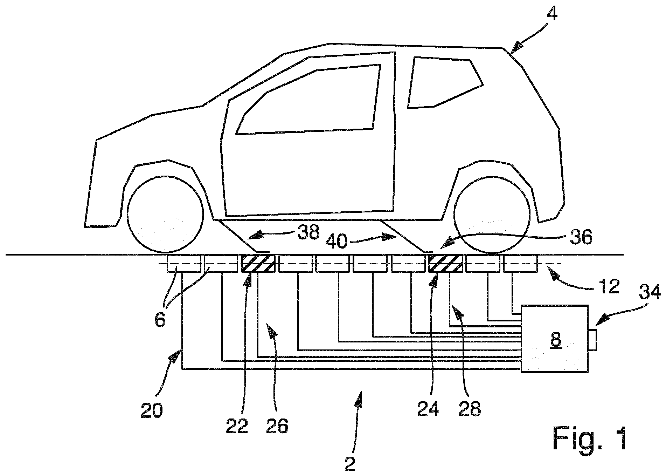

In der Figur 1 ist eine vorteilhafte Ausgestaltung eines Systems 2 dargestellt. Das System 2 dient zur Erzeugung einer Ladespannung, die wiederum zum Aufladen einer Batterie eines Fahrzeugs 4 dient.

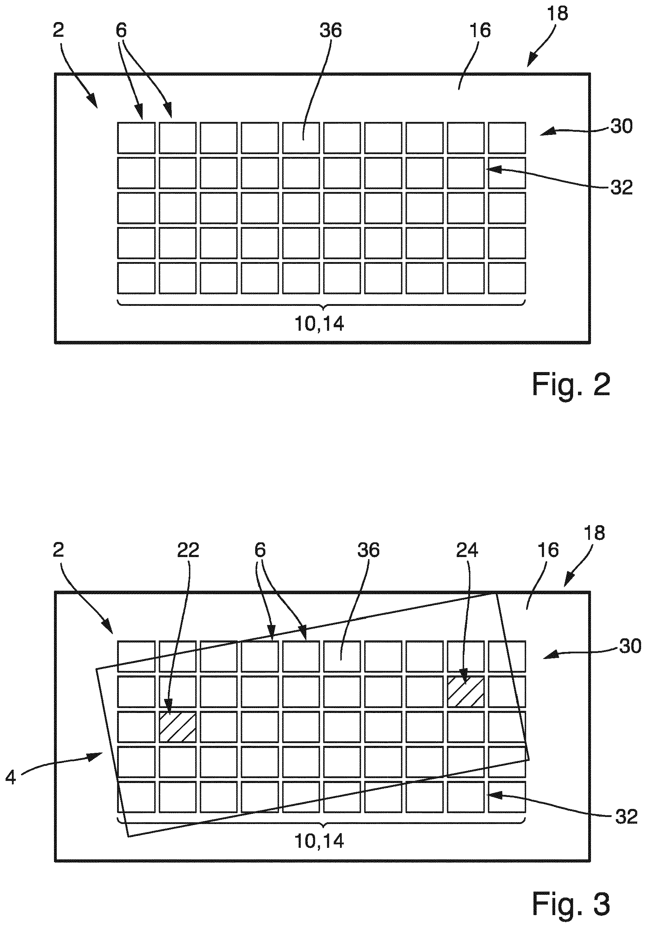

Das System 2 weist eine Mehrzahl von elektrisch leitfähigen Kontaktplatten 6 auf. Die Kontaktplatten 6 sind vorzugsweise in einem Muster 30 angeordnet. In der Figur 2 sind die Kontaktplatten 6 durch Rechtecke schematisch dargestellt, die in einem Muster 30 nach Art einer Rasteranordnung angeordnet sind. Das Muster 30 weist mehrere Zeilen auf, die jeweils eine Mehrzahl von fluchtend hintereinander angeordneten Kontaktplatten 6 umfassen. Von diesen Zeilen sind mehrere Zeilen vorgesehen, die parallel nebeneinander angeordnet sind. Das System 2 weist vorzugsweise mindestens 15 Kontaktplatten 6 auf. Wie es beispielhaft aus der Figur 2 zu entnehmen ist, weist das in Figur 2 angedeutete System 2 20 Kontaktplatten auf. Die Kontaktplatten 6 sind in einem vorbestimmten Kontaktbereich 10 und vorzugsweise in einer gemeinsamen Ebene 12 verteilt angeordnet. Der Kontaktbereich 10, in dem die Kontaktplatten 6 angeordnet sind, kann bei einem stationär ausgebildeten System 2 einen Bereich 14 einer Parkfläche 16 eines Parkplatzes 18 bilden. So können die Kontaktplatten 6 in den Boden des Parkplatzes 18 eingelassen sein, so dass die Kontaktflächen 36 der Kontaktplatten 6 einen Teil der Parkfläche 16 des Parkplatzes 18 bilden.

Wie es aus der Figur 1 schematisch zu entnehmen ist, ist es außerdem bevorzugt vorgesehen, dass die Kontaktplatten 6 in einer gemeinsamen Ebene 12 angeordnet sind. So können die Kontaktplatten 6 beispielsweise mittig zu dieser Ebene 12 ausgerichtet sein. Weiterhin ist es bevorzugt vorgesehen, dass die Kontaktplatten 6 des Systems 2 gleich ausgebildet sind. Beispielsweise können alle Kontaktplatten 6 die gleiche Form und/oder die gleiche Oberflächengröße der jeweiligen Kontaktfläche 36 aufweisen.

Außerdem sind die Kontaktplatten 6 derart angeordnet, sodass jede Kontaktplatte 6 kontaktfrei zu benachbarten Kontaktplatten 6 ist. Es besteht also kein direkter mechanischer Kontakt an den Kanten von gegenüberliegenden Kontaktplatten 6. Folglich kann sich die Kontaktfreiheit auf eine mechanische Kontaktfreiheit beziehen. So kann es beispielsweise vorgesehen sein, dass die Kontaktplatten 6 an ihren Kanten durch elektrisches Isolierungsmaterial 32 elektrisch voneinander isoliert angeordnet sind. Diese Isolierung betrifft vorzugsweise allein die Isolierung der Kontaktplatten 6 als solches gegeneinander. Durch die Verwendung des Isolierungsmaterials 32 können die Kontaktplatten 6 jeweils mit einem unterschiedlichen elektrischen Potential gekoppelt sein. Um dies zu erreichen, weist das System 2 die Steuereinheit 8 auf. Außerdem ist jede Kontaktplatte 6 mit einer zugehörigen, elektrisch leitfähigen Leitungsverbindung 20 verbunden, die mit der Steuereinheit 8 gekoppelt ist, sodass von der Steuereinheit 8 zu jeder Kontaktplatte 6 eine jeweils zugehörige, elektrische Leitungsverbindung über die jeweils zugehörige Verbindungsleitung 20 hergestellt ist. Die Steuereinheit 8 kann über die jeweilige Verbindungsleitung 20 das elektrische Potential jeder der Kontaktplatten 6 auf ein beliebiges Spannungspotential, vorzugsweise zwischen 40 Volt und 500 Volt, einstellen.

Die Steuereinheit 8 ist ausgebildet, zwischen einem Ladezustand und einem Ruhezustand zu wechseln. Außerdem hat es sich als vorteilhaft herausgestellt, wenn die Steuereinheit 8 derart ausgebildet ist, im Ruhezustand kein elektrisches Potential über die Verbindungsleitungen 20 an die Kontaktplatten anzulegen. So kann es bevorzugt vorgesehen sein, dass die Steuereinheit 8 dazu ausgebildet ist, die Kontaktplatten 6 über die zugehörigen Verbindungsleitungen 20 von einer elektrischen Speisespannung, die über den Eingangsanschluss 34 der Steuereinheit 8 zur Verfügung gestellt werden kann, zu entkoppeln. Alternativ oder ergänzend kann die Steuereinheit 8 derart ausgebildet sein, um die Kontaktplatten 6 im Ruhezustand über die jeweiligen Verbindungsleitungen 20 mit dem Erdpotential zu verbinden.

Außerdem ist die Steuereinheit 8 dazu ausgebildet, im Ruhezustand einen direkten oder indirekten elektrischen Verbindungskontakt zwischen einer ersten Kontaktplatte 22 der Mehrzahl der Kontaktplatten 6 und einer anderen, zweiten Kontaktplatte 24 der Mehrzahl der Kontaktplatten 6 zu erkennen. Hierzu kann die Steuereinheit 8 im Ruhezustand einen elektrischen Widerstand zwischen jeder Kombination von zwei der Mehrzahl der Kontaktplatten 6 erfassen. Wird hierbei ein elektrischer Widerstand zwischen einer Kombination von zwei Kontaktplatten 6 erfasst, der kleiner als ein vorbestimmter Referenzwiderstand, vorzugsweise mit einem Wert von 50 Ohm, ist, so wird die Steuereinheit 8 die Kontaktplatten 6 aus dieser Kombination als die erste Kontaktplatte 22 und die zweite Kontaktplatte 24 erkennen. Mit anderen Worten ist es vorgesehen, dass die Steuereinheit 8 derart ausgebildet ist, um im Ruhezustand einen direkten elektrischen Verbindungskontakt zwischen der ersten und zweiten Kontaktplatte 22, 24 zu erkennen, wenn der elektrische Widerstand zwischen der ersten und zweiten Kontaktplatte 22, 24 im Ruhezustand der kleiner als ein vorbestimmter Referenzwiderstand ist. Dieser Referenzwiderstand ist vorzugsweise 50 Ohm. Als Bedingung ist in der Steuereinheit 8 hinterlegt, dass der direkte elektrische Verbindungskontakt zwischen der ersten und zweiten Kontaktplatte 22, 24 nur dann positiv erkannt wird, wenn der elektrische Widerstand zwischen der ersten und zweiten Kontaktplatte 22, 24 im Ruhezustand größer als ein Mindestwiderstand, insbesondere 2 Ohm, ist. Durch den Mindestwiderstand wird effektiv verhindert, dass die Steuereinheit bei einem Kurzschluss zwischen der ersten und zweiten Kontaktplatte 22, 24 in den Ladezustand wechselt. Ist der Widerstand zwischen der ersten und zweiten Kontaktplatte 22, 24 jedoch beispielsweise in einem Bereich zwischen 2 Ohm und 50 Ohm, so kann dies als der direkte elektrische Verbindungskontakt zwischen der ersten und zweiten Kontaktplatte 22, 24 erkannt werden, der einen Wechsel zwischen dem Ruhezustand und dem Ladezustand der Steuereinheit 8 auslösen soll. Denn dieser elektrische Widerstand zwischen der ersten und zweiten Kontaktplatte 22, 24 kann darauf zurückzuführen sein, dass der entsprechende elektrische Verbindungskontakt über die Stromabnehmer 38, 40 eines Fahrzeugs 4 verursacht wird, wenn diese Stromabnehmer 38, 40 von einem parkenden Fahrzeug 4 verursacht werden, das oberhalb der Kontaktplatten 6 im Kontaktbereich 10 geparkt ist. Dies gilt insbesondere dann, wenn die Stromabnehmer 38, 40 von dem Unterboden des Fahrzeugs 4 herunterbewegt worden sind, bis die Enden der Stromabnehmer 38, 40 in direkten elektrischen Verbindungskontakt mit der ersten Kontaktplatte 22 beziehungsweise der zweiten Kontaktplatte 24 sind. Wie es beispielhaft aus der Figur 1 zu entnehmen ist, kann der erste Stromabnehmer 38 beispielsweise einen direkten elektrischen und mechanischen Kontakt mit der ersten Kontaktplatte 22 herstellen. Der zweite Stromabnehmer 40 kann einen direkten elektrischen und mechanischen Kontakt mit der zweiten Kontaktplatte 24 herstellen. Die beiden Stromabnehmer 38, 40 können mit einer Steuerschaltung des Fahrzeugs 4 gekoppelt sein, die einen elektrischen Widerstand einstellt, der kleiner als davor bestimmte Referenzwiderstand und vorzugsweise größer als der Mindestwiderstand ist. Durch den elektrischen Kontakt zwischen den heruntergelassenen Stromabnehmern 38, 40 wird dieser Widerstand in entsprechender Weise zwischen der ersten und zweiten Kontaktplatte 22, 24 wirken. Wird der entsprechende, direkte elektrische Kontakt, der auch als elektrischer Verbindungskontakt bezeichnet wird, zwischen der ersten Kontaktplatte 22 und der zweiten Kontaktplatte 24 an der Steuereinheit 8 erkannt, wechselt diese von dem Ruhezustand in den Ladezustand. Der Wechsel kann verzögert erfolgen. Hierzu kann der Wechsel bei Erkennen des elektrischen Verbindungskontakts eingeleitet werden und nach Ablauf einer vorbestimmten Verweildauer finalisiert werden. Die Verweildauer kann beispielsweise zwei Sekunden betragen. Wird der elektrische Verbindungskontakt also zwischen der ersten und zweiten Kontaktplatte 22, 24 für eine Verweildauer ununterbrochen von der Steuereinheit 8 erkannt, wobei die Verweildauer länger als zwei Sekunden ist, findet tatsächlich der Wechsel in den Ladezustand statt.

Anstatt den elektrischen Verbindungskontakt direkt zwischen der ersten und zweiten Kontaktplatte 22, 24 zu erfassen, kann die Steuereinheit 8 alternativ oder ergänzend dazu ausgebildet sein, in dem Ruhezustand eine elektrische Spannung zwischen jeder Kombination von zwei der Mehrzahl der Kontaktplatten 6 zu erfassen. Außerdem kann die Steuereinheit 8 dazu ausgebildet sein, im Ruhezustand einen zumindest indirekten elektrischen Verbindungskontakt zwischen der ersten und zweiten Kontaktplatte 22 ,24 zu erkennen, wenn eine elektrische Fremdspannung zwischen der ersten und zweiten Kontaktplatte 22, 24 aufgebaut ist. Diese Fremdspannung kann über die Stromabnehmer 38, 40 des Fahrzeugs 4 auf die erste und zweite Kontaktplatte 22, 24 angelegt sein. Ist diese Fremdspannung beispielsweise größer als eine vorbestimmte Referenzspannung, beispielsweise 20 Volt oder 30 Volt, so wird in diesem Fall von der Steuereinheit 8 erkannt, dass ein indirekter elektrischer Verbindungskontakt zwischen der ersten und zweiten Kontaktplatte 22, 24 besteht. Ist die Fremdspannung hingegen kleiner als die vorbestimmte Referenzspannung, so wird die Steuereinheit 8 dies nicht als den indirekten elektrischen Verbindungskontakt zwischen der ersten und zweiten Kontaktplatte 22, 24 erkennen. Somit kann die Steuereinheit 8 dazu ausgebildet sein, im Ruhezustand den direkten elektrischen Verbindungskontakt über den indirekten elektrischen Verbindungskontakt zwischen der ersten und zweiten Kontaktplatte 22, 24 zu erkennen.

Um einen direkten oder indirekten elektrischen Kontakt zwischen der ersten Kontaktplatte 22 und der zweiten Kontaktplatte 24 herzustellen, kann ein Fahrzeug 4 mit den montierten Stromabnehmern 38, 40 auf dem Parkplatz 18 abgestellt werden. Der Unterboden des Fahrzeugs 4 ist schematisch in der Figur 3 durch ein großes Rechteck angedeutet, das den Parkplatz 18 überlagert. Werden die Stromabnehmer 38, 40 des Fahrzeugs 4 nach unten bewegt, so werden zwei unterschiedliche Kontaktplatten 6 des Systems 2 von den Stromabnehmern 38, 40 kontaktiert. Der erste Stromabnehmer 38 kommt mit der Kontaktfläche 36 der ersten Kontaktplatte 22 und der zweite Stromabnehmer 40 mit der Kontaktfläche 36 der zweiten Kontaktplatte 24 in elektrischen und mechanischen Kontakt. Je nach Stellung, in der das Fahrzeug 4 auf dem Parkplatz 18 abgestellt ist, können andere zwei Kontaktplatten 6 der Mehrzahl der elektrisch leitfähigen Kontaktplatten 6 die erste Kontaktplatte 22 und die zweite Kontaktplatte 24 bilden. Die erste und zweite Kontaktplatte 22, 24 sind unterhalb des Fahrzeugs 4 angeordnet, sodass mit einer hohen Wahrscheinlichkeit gewährleistet werden kann, dass kein direkter Körperkontakt mit der ersten und/oder zweiten Kontaktplatte 22, 24 entstehen kann. Dadurch wird ein großes Sicherheitsniveau mit dem System 2 gewährleistet.

Nicht zuletzt aufgrund des großen Sicherheitsniveaus ist es deshalb auch möglich, eine Ladespannung zwischen der ersten und zweiten Kontaktplatte 22, 24 entstehen zu lassen. Die Steuereinheit 8 ist hierzu derart ausgebildet, im Ladezustand über die Verbindungsleitung 26 zu der ersten Kontaktplatte 22 und die Verbindungsleitung 28 zu der zweiten Kontaktplatte 24 jeweils ein elektrisches Spannungspotential an die erste und zweite Kontaktplatte 22, 24 derart anzulegen, sodass als Ladespannung eine elektrische Spannungsdifferenz zwischen der ersten und zweiten Kontaktplatte 22, 24 entsteht. Diese Ladespannung entsteht deshalb auch zwischen dem ersten und zweiten Stromabnehmer 38, 40, sodass ein Ladestrom hervorgerufen wird, der in dem Fahrzeug 4 zu einem Aufladen der Batterie des Fahrzeugs 4 genutzt werden kann.

Das System 2 bietet den Vorteil, dass die Ladespannung für eine Vielzahl von unterschiedlichen Fahrzeugen bereitgestellt werden kann. So kann das Fahrzeug 4 beispielsweise ein Personenkraftwagen oder ein Lastkraftwagen sein. Außerdem kann das Fahrzeug 4 ein Fahrzeug 4 sein, das von einer Person gelenkt und/oder gesteuert wird. Es ist jedoch auch möglich, dass das Fahrzeug 4 als ein autonomes Fahrzeug 4 ausgebildet ist. Sämtliche zuvor genannten Beispiele eines Fahrzeugs 4 können mit dem System 2 zusammenwirken, denn die Erzeugung der Ladespannung hängt von dem Wechsel der Steuereinheit 8 in dem Ladezustand ab, der ausgeführt wird, wenn der direkte oder indirekte elektrische Verbindungskontakt zwischen der ersten Kontaktplatte 22 und der zweiten Kontaktplatte 24 erkannt wird. Ob dieser direkte oder indirekte elektrische Verbindungskontakt durch ein autonomes Fahrzeug 4 oder ein von einer Person gesteuertes Fahrzeug 4 hergestellt wird, ist für die Funktion des Systems 2 unerheblich. Somit ist das System 2 besonders vielfältig und insbesondere auch für autonome Fahrzeuge 4 einsetzbar.

Ergänzend sei darauf hingewiesen, dass "aufweisend" keine anderen Elemente oder Schritte ausschließt und "ein" oder "eine" keine Vielzahl ausschließt. Ferner sei darauf hingewiesen, dass Merkmale, die mit Verweis auf eines der obigen Ausführungsbeispiele beschrieben worden sind, auch in Kombination mit anderen Merkmalen anderer oben beschriebener Ausführungsbeispiele verwendet werden können. Bezugszeichen in den Ansprüchen sind nicht als Einschränkung anzusehen.

### Bezugszeichenliste

- 2: System
- 4: Fahrzeug
- 6: Kontaktplatte
- 8: Steuereinheit
- 10: Kontaktbereich
- 12: Ebene
- 14: Bereich
- 16: Parkfläche
- 18: Parkplatz
- 20: Verbindungsleitung
- 22: erste Kontaktplatte
- 24: zweite Kontaktplatte
- 26: erste Verbindungsleitung
- 28: zweite Verbindungsleitung
- 30: Muster
- 32: Isolierungsmaterial
- 34: Eingangsanschluss
- 36: Kontaktfläche
- 38: erster Stromabnehmer
- 40: zweiter Stromabnehmer

## Patentansprüche

1. **System** (2) zum Erzeugen einer Ladespannung für ein Laden einer Batterie eines zumindest zwei Stromabnehmer umfassenden Fahrzeugs (4), aufweisend:
eine Mehrzahl von elektrisch leitfähigen Kontaktplatten (6), und
eine Steuereinheit (8),
wobei die Kontaktplatten (6) in einem vorbestimmten Kontaktbereich (10) einer gemeinsamen Ebene (12) verteilt angeordnet sind,
wobei die Kontaktplatten (6) ausgebildet sind, einen Bereich (14) einer Parkfläche (16) eines Parkplatzes (18) für ein Fahrzeug (4) zu bilden,
wobei jede Kontaktplatte (6) kontaktfrei zu benachbarten Kontaktplatten (6) angeordnet ist,
wobei jede Kontaktplatte (6) mit einer zugehörigen, elektrisch leitfähigen Verbindungsleitung (20) verbunden ist, die mit der Steuereinheit (8) gekoppelt ist, sodass von der Steuereinheit (8) zu jeder Kontaktplatte (6) eine elektrische Leitungsverbindung über die jeweils zugehörige Verbindungsleitung (20) hergestellt ist,
wobei die Steuereinheit (8) ausgebildet ist, zwischen einem Ladezustand und einem Ruhezustand zu wechseln,
wobei die Steuereinheit (8) ausgebildet ist, im Ruhezustand einen direkten oder indirekten elektrischen Verbindungskontakt zwischen einer ersten Kontaktplatte (22) der Mehrzahl der Kontaktplatten (6) und einer anderen, zweiten Kontaktplatte (24) der Mehrzahl der Kontaktplatten (6) zu erkennen,
wobei die Steuereinheit (8) ausgebildet ist, bei Erkennen des elektrischen Verbindungskontakts in den Ladezustand zu wechseln, und
wobei die Steuereinheit (8) ausgebildet ist, im Ladezustand über die Verbindungsleitung (26) zur ersten Kontaktplatte (22) und die Verbindungsleitung (28) zu der zweiten Kontaktplatte (24) jeweils ein elektrisches Spannungspotential an die erste und zweite Kontaktplatte (22, 24) anzulegen, sodass als Ladespannung eine elektrische Spannungsdifferenz zwischen der ersten und zweiten Kontaktplatte (22, 24) entsteht, wobei die Steuereinheit (8) ausgebildet ist, in dem Ruhezustand eine elektrische Spannung zwischen jeder Kombination von zwei der Mehrzahl der Kontaktplatten (6) zu erfassen,
**dadurch gekennzeichnet, dass**
die Steuereinheit (8) ausgebildet ist, im Ruhezustand einen indirekten elektrischen Verbindungskontakt zwischen der ersten und zweiten Kontaktplatte (22, 24) zu erkennen, wenn eine von den Stromabnehmern des Fahrzeugs angelegte elektrische Fremdspannung zwischen der ersten und zweiten Kontaktplatte (22, 24) aufgebaut wird und im Ruhezustand einen direkten elektrischen Verbindungskontakt zwischen der ersten und zweiten Kontaktplatte zu erkennen, wenn der elektrische Widerstand zwischen der ersten und zweiten Kontaktplatte im Ruhezustand kleiner als ein vorbestimmter Referenzwiderstand ist.

2. System (2) nach dem vorhergehenden Anspruch, **dadurch gekennzeichnet, dass** die Mehrzahl der Kontaktplatten (6) nach einem vorbestimmten Muster (30), insbesondere ein Muster nach Art eines Rasters, angeordnet sind.

3. System (2) nach einem der vorhergehenden Ansprüche, **dadurch gekennzeichnet, dass** die Kontaktplatten (6) an ihren Kanten durch elektrisches Isolierungsmaterial (32) elektrisch voneinander isoliert angeordnet sind.

4. System (2) nach einem der vorhergehenden Ansprüche, **dadurch gekennzeichnet, dass** das System (2) mindestens neun, mindestens 15 oder mindestens 20 Kontaktplatten (6) aufweist.

5. System (2) nach einem der vorhergehenden Ansprüche, **dadurch gekennzeichnet, dass** alle Kontaktplatten (6) die gleiche Form und/oder die gleiche Oberflächengröße aufweisen.

6. System (2) nach einem der vorhergehenden Ansprüche, **dadurch gekennzeichnet, dass** jede Kontaktplatte (6) von einem Metall, insbesondere Edelstahl, gebildet ist.

7. System (2) nach einem der vorhergehenden Ansprüche, **dadurch gekennzeichnet, dass** die Steuereinheit (8) einen Eingangsanschluss (34) aufweist, über den die Steuereinheit (8) mit einer elektrischen Energiequelle koppelbar ist.

8. System (2) nach einem der vorhergehenden Ansprüche, **dadurch gekennzeichnet, dass** die Steuereinheit (8) ausgebildet ist, im Ruhezustand einen zumindest indirekten elektrischen Verbindungskontakt zwischen der ersten und zweiten Kontaktplatte (22, 24) zu erkennen, wenn die elektrische Fremdspannung größer als 20 Volt ist.

9. System (2) nach einem der vorhergehenden Ansprüche, **dadurch gekennzeichnet, dass** die Steuereinheit (8) ausgebildet ist, in dem Ruhezustand einen elektrischen Widerstand zwischen jeder Kombination von zwei der Mehrzahl der Kontaktplatten (6) zu erfassen.

10. System (2) nach dem vorhergehenden Anspruch, **dadurch gekennzeichnet, dass** die Steuereinheit (8) ausgebildet ist, im Ruhezustand einen direkten elektrischen Verbindungskontakt zwischen der ersten und zweiten Kontaktplatte (22, 24) zu erkennen, wenn der elektrische Widerstand zwischen der ersten und zweiten Kontaktplatte (22, 24) im Ruhezustand kleiner als ein vorbestimmter Referenzwiderstand, insbesondere mit einem Wert von 50 Ohm, und größer als ein Mindestwiderstand, insbesondere von 2 Ohm, ist.

11. System (2) nach einem der vorhergehenden Ansprüche, **dadurch gekennzeichnet, dass** die Steuereinheit (8) ausgebildet ist, im Ladezustand als Plattenwiderstand den elektrischen Widerstand zwischen der ersten und zweiten Kontaktplatte (22, 24) zu erfassen, und wobei die Steuereinheit (8) ausgebildet ist, vom Ladezustand in den Ruhezustand zu wechseln oder im Ladezustand das Anlegen der elektrischen Spannungspotentiale an die erste und zweite Kontaktplatte (22, 24) zu unterbrechen, wenn der Plattenwiderstand kleiner als ein Sicherheitswiderstand, insbesondere mit einem Wert von 2 Ohm, ist.

12. System (2) nach einem der vorhergehenden Ansprüche, **dadurch gekennzeichnet, dass** das System (2) als ein stationäres System ausgebildet ist.

13. System (2) nach einem der vorhergehenden Ansprüche 1 bis 11, **dadurch gekennzeichnet, dass** das System (2) als ein mobiles System ausgebildet ist.

## Claims

1. System (2) for generating a charging voltage for charging a battery of a vehicle (4) comprising at least two current collectors, having:
a plurality of electrically conductive contact plates (6), and
a control unit (8),
wherein the contact plates (6) are arranged in a distributed manner in a predetermined contact region (10) of a common plane (12),
wherein the contact plates (6) are designed to form a region (14) of a parking area (16) of a parking space (18) for a vehicle (4),
wherein each contact plate (6) is arranged so as not to be in contact with adjacent contact plates (6),
wherein each contact plate (6) is connected to an associated, electrically conductive connection line (20) which is coupled to the control unit (8) such that an electrical line connection is established from the control unit (8) to each contact plate (6) via the respectively associated connection line (20),
wherein the control unit (8) is designed to switch between a charging state and an idle state,
wherein the control unit (8) is designed, in the idle state, to detect a direct or indirect electrical connection contact between a first contact plate (22) of the plurality of contact plates (6) and another second contact plate (24) of the plurality of contact plates (6),
wherein the control unit (8) is designed to switch into the charging state when the electrical connection contact is detected, and
wherein the control unit (8) is designed, in the charging state, to apply an electrical voltage potential to the first and second contact plates (22, 24) via the connection line (26) to the first contact plate (22) and the connection line (28) to the second contact plate (24), respectively, such that an electrical voltage difference between the first and second contact plates (22, 24) is produced as the charging voltage,
wherein the control unit (8) is designed, in the idle state, to measure an electrical voltage between each combination of two of the plurality of contact plates (6), **characterized in that**
the control unit (8) is designed, in the idle state, to detect an indirect electrical connection contact between the first and second contact plates (22, 24) if an electrical external voltage applied by the current collectors of the vehicle is built up between the first and second contact plates (22, 24) and, in the idle state, to detect a direct electrical connection contact between the first and second contact plates if the electrical resistance between the first and second contact plates in the idle state is less than a predetermined reference resistance.

2. System (2) according to the preceding claim, **characterized in that** the plurality of contact plates (6) are arranged in a predetermined pattern (30), in particular a pattern in the form of a grid.

3. System (2) according to either of the preceding claims, **characterized in that** the contact plates (6) are arranged so as to be electrically insulated from one another at their edges by electrical insulation material (32).

4. System (2) according to one of the preceding claims, **characterized in that** the system (2) has at least nine, at least 15 or at least 20 contact plates (6).

5. System (2) according to one of the preceding claims, **characterized in that** all the contact plates (6) have the same shape and/or the same surface area.

6. System (2) according to one of the preceding claims, **characterized in that** each contact plate (6) is formed from a metal, in particular stainless steel.

7. System (2) according to one of the preceding claims, **characterized in that** the control unit (8) has an input connection (34) via which the control unit (8) is able to be coupled to an electrical energy source.

8. System (2) according to one of the preceding claims, **characterized in that** the control unit (8) is designed, in the idle state, to detect an at least indirect electrical connection contact between the first and second contact plates (22, 24) if the electrical external voltage is greater than 20 volts.

9. System (2) according to one of the preceding claims, **characterized in that** the control unit (8) is designed, in the idle state, to measure an electrical resistance between each combination of two of the plurality of contact plates (6).

10. System (2) according to the preceding claim, **characterized in that** the control unit (8) is designed, in the idle state, to detect a direct electrical connection contact between the first and second contact plates (22, 24) if the electrical resistance between the first and second contact plates (22, 24) in the idle state is less than a predetermined reference resistance, in particular having a value of 50 ohms, and greater than a minimum resistance, in particular of 2 ohms.

11. System (2) according to one of the preceding claims, **characterized in that** the control unit (8) is designed, in the charging state, to measure the electrical resistance between the first and second contact plates (22, 24) as the plate resistance, and wherein the control unit (8) is designed to switch from the charging state into the idle state or to interrupt the electrical voltage potentials being applied to the first and second contact plates (22, 24) in the charging state if the plate resistance is less than a safety resistance, in particular having a value of 2 ohms.

12. System (2) according to one of the preceding claims, **characterized in that** the system (2) is designed as a stationary system.

13. System (2) according to one of preceding Claims 1 to 11, **characterized in that** the system (2) is designed as a mobile system.

## Revendications

1. Système (2) pour générer une tension de charge pour une charge d'une batterie d'un véhicule (4) comportant au moins deux collecteurs de courant, possédant :
une pluralité de plaques de contact (6) électriquement conductrices et
une unité de commande (8),
les plaques de contact (6) étant disposées réparties dans une zone de contact (10) prédéterminée d'un plan commun (12),
les plaques de contact (6) étant configurées pour former une zone (14) d'un emplacement de stationnement (16) d'une place de stationnement (18) pour un véhicule (4),
chaque plaque de contact (6) étant disposée sans contact avec les plaques de contact (6) voisines,
chaque plaque de contact (6) étant reliée à une ligne de liaison (20) électriquement conductrice associée, qui est connectée à l'unité de commande (8), de sorte qu'une liaison par ligne électrique est établie de l'unité de commande (8) vers chaque plaque de contact (6) par le biais de la ligne de liaison (20) respectivement associée,
l'unité de commande (8) étant configurée pour passer entre un état de charge et un état de repos,
l'unité de commande (8) étant configurée pour, à l'état de repos, reconnaître un contact de liaison électrique direct ou indirect entre une première plaque de contact (22) de la pluralité de plaques de contact (6) et une autre, deuxième plaque de contact (24) de la pluralité de plaques de contact (6),
l'unité de commande (8) étant configurée pour, lors de la reconnaissance du contact de liaison électrique, passer à l'état de charge, et
l'unité de commande (8) étant configurée pour, à l'état de charge, appliquer respectivement un potentiel de tension électrique à la première et à la deuxième plaque de contact (22, 24) par le biais de la ligne de liaison (26) vers la première plaque de contact (22) et la ligne de liaison (28) vers la deuxième plaque de contact (24), de sorte que la tension de charge produite est une différence de tension électrique entre la première et la deuxième plaque de contact (22, 24), l'unité de commande (8) étant configurée pour, à l'état de repos, détecter une tension électrique entre chaque combinaison de deux de la pluralité de plaques de contact (6),
**caractérisé en ce que**
l'unité de commande (8) est configurée pour, à l'état de repos, reconnaître un contact de liaison électrique indirect entre la première et la deuxième plaque de contact (22, 24) lorsqu'une tension électrique externe appliquée par les collecteurs de courant du véhicule est établie entre la première et la deuxième plaque de contact (22, 24) et, à l'état de repos, reconnaître un contact de liaison électrique direct entre la première et la deuxième plaque de contact lorsque la résistance électrique entre la première et la deuxième plaque de contact à l'état de repos est inférieure à une résistance de référence prédéterminée.

2. Système (2) selon la revendication précédente, **caractérisé en ce que** la pluralité de plaques de contact (6) sont disposées selon un modèle (30) prédéterminé, notamment selon un modèle à la manière d'une grille.

3. Système (2) selon l'une des revendications précédentes, **caractérisé en ce que** les plaques de contact (6) sont disposées isolées électriquement les unes des autres au niveau de leurs bords par un matériau isolant électrique (32).

4. Système (2) selon l'une des revendications précédentes, **caractérisé en ce que** le système (2) possède au moins neuf, au moins 15 ou au moins 20 plaques de contact (6).

5. Système (2) selon l'une des revendications précédentes, **caractérisé en ce que** toutes les plaques de contact (6) présentent la même forme et/ou la même superficie.

6. Système (2) selon l'une des revendications précédentes, **caractérisé en ce que** chaque plaque de contact (6) est constituée d'un métal, notamment de l'acier inoxydable.

7. Système (2) selon l'une des revendications précédentes, **caractérisé en ce que** l'unité de commande (8) possède une borne d'entrée (34) par le biais de laquelle l'unité de commande (8) peut être couplée à une source d'énergie électrique.

8. Système (2) selon l'une des revendications précédentes, **caractérisé en ce que** l'unité de commande (8) est configurée pour, à l'état de repos, reconnaître un contact de liaison électrique au moins indirect entre la première et la deuxième plaque de contact (22, 24) lorsque la tension externe électrique est supérieure à 20 volts.

9. Système (2) selon l'une des revendications précédentes, **caractérisé en ce que** l'unité de commande (8) est configurée pour, à l'état de repos, détecter une résistance électrique entre chaque combinaison de deux de la pluralité de plaques de contact (6).

10. Système (2) selon la revendication précédente, **caractérisé en ce que** l'unité de commande (8) est configurée pour, à l'état de repos, reconnaître un contact de liaison électrique direct entre la première et la deuxième plaque de contact (22, 24) lorsque la résistance électrique entre la première et la deuxième plaque de contact (22, 24) à l'état de repos est inférieure à une résistance de référence prédéterminée, notamment ayant une valeur de 50 ohms, et supérieure à une résistance minimale, notamment de 2 ohms

11. Système (2) selon l'une des revendications précédentes, **caractérisé en ce que** l'unité de commande (8) est configurée pour, à l'état de charge, détecter comme résistance de plaque la résistance électrique entre la première et la deuxième plaque de contact (22, 24), et l'unité de commande (8) étant configurée pour passer de l'état de charge à l'état de repos ou, à l'état de charge, interrompre l'application des potentiels de tension électriques à la première et la deuxième plaque de contact (22, 24), lorsque la résistance de plaque est inférieure à une résistance de sécurité, notamment ayant une valeur de 2 ohms.

12. Système (2) selon l'une des revendications précédentes, **caractérisé en ce que** le système (2) est réalisé sous la forme d'un système fixe.

13. Système (2) selon l'une des revendications précédentes 1 à 11, **caractérisé en ce que** le système (2) est réalisé sous la forme d'un système mobile.
